# EUROPÄISCHE PATENTSCHRIFT

(11) **EP 3 532 187 B1**
(45) Veröffentlichungstag und Bekanntmachung des Hinweises auf die Patenterteilung: **19.08.2020**
(21) Anmeldenummer: 17788216.4
(22) Anmeldetag: 24.10.2017
(51) Int. Cl.: B01D 53/04, B01D 53/26, B60T 17/00

(54) **LUFTTROCKNERPATRONE**
AIR DRYER CARTRIDGE
CARTOUCHE DE DÉSHUMIDIFICATEUR

(30) Priorität: 27.10.2016 DE 102016120477
(43) Veröffentlichungstag der Anmeldung: 04.09.2019
(73) Patentinhaber: KNORR-BREMSE Systeme für Nutzfahrzeuge GmbH, 80809 München (DE)
(72) Erfinder: REIFINGER, Günther, 82110 Germering (DE); OCHSENKÜHN, Andreas, 80339 München (DE); SCHÄBEL, Stefan, 84036 Landshut (DE); LEINUNG, Andreas, 81245 München (DE)
(86) Internationale Anmeldenummer: PCT/EP2017/077071
(87) Internationale Veröffentlichungsnummer: WO 2018/077833

(56) Entgegenhaltungen:
- CN-A- 105 032 134
- DE-A1-102010 011 956
- DE-B4- 10 392 976
- US-A1- 2007 144 350

## Beschreibung

Die vorliegende Erfindung betrifft eine Lufttrocknerpatrone, insbesondere für eine Druckluftaufbereitungsanlage von Nutzfahrzeugen.

Derartige Lufttrocknerpatronen kommen zum Beispiel in Nutzfahrzeugen wie Lastkraftwagen und Traktoren zum Einsatz. Diese verfügen häufig über einen oder mehrere Druckluftverbraucher wie zum Beispiel Bremssysteme oder Luftfederungen, die mit Druckluft versorgt werden müssen. Die Druckluft wird typischerweise von einem Kompressor, zum Beispiel einem von einem Antriebsmotor des Fahrzeugs angetriebenen Hubkolbenkompressor, zur Verfügung gestellt. Um einen störungsfreien Betrieb der Druckluftverbraucher zu gewährleisten, muss die vom Kompressor bereitgestellte Druckluft üblicherweise weiter aufbereitet werden. In den dafür vorgesehenen Druckluftaufbereitungsanlagen wird die Druckluft von Schmutzpartikeln, die bereits in der angesaugten Luft enthalten waren, sowie Öl- und Rußpartikeln, die während des Verdichtungsprozesses vom Kompressor in die Druckluft eingetragen werden, gereinigt und wird in der Druckluft vorhandene Feuchtigkeit abgeschieden. Zu diesem Zweck verfügen die Druckluftaufbereitungsanlagen von Nutzfahrzeugen in der Regel über Lufttrocknerpatronen, die die Druckluft entfeuchten und vorzugsweise auch Öl- und Schmutzpartikel aufnehmen können.

Herkömmliche Lufttrocknerpatronen weisen ein Patronengehäuse mit einem geschlossenen Gehäusedeckel, ein in dem Patronengehäuse aufgenommenes Trockenmittel, einen Befestigungsflansch zum Verschließen einer dem Gehäusedeckel abgewandten offenen Stirnseite des Patronengehäuses und Befestigen der Lufttrocknerpatrone an einer Druckluftaufbereitungsvorrichtung und eine innerhalb des Patronengehäuses angeordnete Filtereinrichtung zum Reinigen der Druckluft auf. Im Normalbetrieb der Lufttrocknerpatrone durchströmt die Druckluft zunächst die Filtereinrichtung, bevor sie in das Trockenmittel gelangt. Für den Regenerationsbetrieb der Lufttrocknerpatrone, in dem die Lufttrocknerpatrone in umgekehrter Richtung durchströmt wird, ist in der Regel ein Bypass zum Umgehen der Filtereinrichtung vorgesehen und ist in diesem Bypass ein Rückschlagventil angeordnet.

Derartige Lufttrocknerpatronen sind beispielsweise bekannt aus der DE 103 92 976 B4, der CN 105 032 134 A, der DE 10 2010 011 956 A1, und der US 2007/144350 A1.

Der Erfindung liegt die Aufgabe zugrunde, eine verbesserte Lufttrocknerpatrone mit einem einfachen Aufbau zu schaffen.

Diese Aufgabe wird gelöst durch eine Lufttrocknerpatrone mit den Merkmalen des Anspruchs 1. Vorteilhafte Ausgestaltungen der Erfindung sind Gegenstand der abhängigen Ansprüche.

Die erfindungsgemäße Lufttrocknerpatrone weist ein Patronengehäuse mit einem geschlossenen Gehäusedeckel, ein in dem Patronengehäuse aufgenommenes Trockenmittel und einen Befestigungsflansch zum Verschließen einer dem Gehäusedeckel abgewandten offenen Stirnseite des Patronengehäuses und Befestigen der Lufttrocknerpatrone an einer Druckluftaufbereitungsvorrichtung auf. Weiter weist die Lufttrocknerpatrone eine innerhalb des Patronengehäuses angeordnete Filtereinrichtung, die im Druckluftstrom bezogen auf einen Normalbetrieb der Lufttrocknerpatrone stromauf des Trockenmittels positioniert ist, einen Bypass zum Umgehen der Filtereinrichtung und ein in dem Bypass angeordnetes Rückschlagventil, das einen Druckluftstrom in Richtung zum Trockenmittel hin sperrt und einen Druckluftstrom in Richtung vom Trockenmittel her zulässt, auf. Das Rückschlagventil ist in einer Richtung im Wesentlichen quer zu einer Längsachse der Lufttrocknerpatrone von Druckluft durchströmbar und an einer dem Gehäusedeckel zugewandten Flanschinnenseite des Befestigungsflansches abgestützt.

Gemäß der Erfindung wird vorgeschlagen, das Rückschlagventil derart auszubilden und in der Lufttrocknerpatrone anzuordnen, dass es in einer Richtung im Wesentlichen quer zur Längsachse der Lufttrocknerpatrone von Druckluft durchströmt wird und es sich an der dem Gehäusedeckel zugewandten Flanschinnenseite des Befestigungsflansches abstützt. Durch diese Maßnahme kann das Rückschlagventil ohne direkte Verbindung zum Patronengehäuse und in radialer Richtung mit Abstand zum Patronengehäuse innerhalb des Patronengehäuses angeordnet werden, sodass es besser gegen mechanische Belastungen auf das Patronengehäuse geschützt ist. Die so ausgestaltete Lufttrocknerpatrone besitzt zudem einen einfachen Aufbau.

In einer vorteilhaften Ausgestaltung der Erfindung ist in dem Patronengehäuse ein inneres Gehäuse angeordnet, um das Trockenmittel in einem Zwischenraum zwischen dem Patronengehäuse und dem inneren Gehäuse aufzunehmen. Bei dieser Ausgestaltung ist das Rückschlagventil vorzugsweise einteilig mit dem inneren Gehäuse ausgebildet. So kann die Anzahl der einzelnen Bauteile reduziert werden und können Aufbau und Zusammenbau der Lufttrocknerpatrone vereinfacht werden.

In einer vorteilhaften Ausgestaltung der Erfindung ist das Rückschlagventil an dem inneren Gehäuse angeformt. Bei dieser Ausgestaltung kann das Rückschlagventil bevorzugt an das innere Gehäuse angespritzt werden oder können inneres Gehäuse und Rückschlagventil mit einem 2-Komponenten-Spritzgießverfahren hergestellt werden. Das innere Gehäuse und das Rückschlagventil können vorzugsweise aus dem gleichen Kunststoffmaterial oder aus verschiedenen Kunststoffmaterialien gefertigt werden.

Gemäß der Erfindung weist das Rückschlagventil ein freies Ende auf, das sich an der Flanschinnenseite des Befestigungsflansches abstützt. Beispielsweise kann das Rückschlagventil in der Art einer Ventilklappe ausgebildet sein. Die Ventilfunktion des Rückschlagventils kann vorzugsweise durch eine Formgebung und/oder Materialauswahl der Ventilklappe und/oder eine Formgebung der Verbindung zwischen Ventilklappe und innerem Gehäuse erreicht werden.

Erfindungsgemäß stützt sich das freie Ende des Rückschlagventils an einem Abschnitt der Flanschinnenseite des Befestigungsflansches ab, der in einem Winkel von höchstens 80° zur Längsachse der Lufttrocknerpatrone verläuft. In einer bevorzugten Ausführungsform verläuft der Winkel im Bereich von etwa 20° bis etwa 70°, noch bevorzugter im Bereich von etwa 35° bis etwa 55° zur Längsachse der Lufttrocknerpatrone. Vorzugsweise ist der schräg verlaufende Abschnitt der Flanschinnenseite des Befestigungsflansches durch einen schräg verlaufenden Abschnitt des Befestigungsflansches ausgebildet.

Zusätzlich kann bei dieser Ausgestaltung das freie Ende des Rückschlagventils in einem Winkel von wenigstens etwa 10°, bevorzugter im Bereich von etwa 20° bis etwa 70°, noch bevorzugter im Bereich von etwa 35° bis etwa 55° zur Längsachse der Lufttrocknerpatrone ausgerichtet sein. D.h. es sind verschiedene Kombinationen zwischen einem senkrecht oder schräg zur Längsachse der Lufttrocknerpatrone verlaufenden Abschnitt des Befestigungsflansches und einem parallel oder schräg zur Längsachse der Lufttrocknerpatrone ausgerichteten freien Ende des Rückschlagventils denkbar.

Ferner stellt bei dieser Ausgestaltung bevorzugt eine dem inneren Gehäuse abgewandte Flanschaußenseite des Befestigungsflansches eine Dichtfläche für einen Dichtring bereit. Diese Dichtfläche liegt vorzugsweise einem Abschnitt der Flanschinnenseite gegenüber, an dem sich das Rückschlagventil abstützt. In einer anderen Ausführungsvariante ist diese Dichtfläche zu einem Abschnitt der Flanschinnenseite versetzt, an dem sich das Rückschlagventil abstützt.

In einer weiteren vorteilhaften Ausgestaltung der Erfindung ist die Filtereinrichtung im Wesentlichen koaxial zur Längsachse der Lufttrocknerpatrone angeordnet. Bei dieser Ausgestaltung wird die Filtereinrichtung bevorzugt in radialer Richtung quer zur Längsachse der Lufttrocknerpatrone von Druckluft durchströmt. Zudem kann bei dieser Ausgestaltung vorzugsweise ein Raumbereich innerhalb des Patronengehäuses, der in radialer Richtung außerhalb der Filtereinrichtung liegt, zumindest teilweise für die Aufnahme des Trockenmittels genutzt werden.

Vorzugsweise weist das innere Gehäuse einen ersten Teil und einen zweiten Teil auf. Dabei ist der erste Teil des inneren Gehäuses bevorzugt radial außerhalb des zweiten Teils angeordnet und ist der zweite Teil des inneren Gehäuses relativ zum ersten Teil in axialer Richtung parallel zur Längsachse der Lufttrocknerpatrone bewegbar. Bei dieser Ausgestaltung ist vorzugsweise ein Vorspannelement vorgesehen, das den zweiten Teil des inneren Gehäuses in Richtung zum Gehäusedeckel der Lufttrocknerpatrone drückt, um das Trockenmittel zu komprimieren.

Die vorliegende Erfindung ist insbesondere zum Einsatz in Druckluftaufbereitungsanlagen eines Nutzfahrzeugs vorteilhaft geeignet.

Obige sowie weitere Vorteile, Merkmale und Anwendungsmöglichkeiten der Erfindung werden aus der nachfolgenden Beschreibung von verschiedenen Ausführungsbeispielen anhand der beiliegenden Zeichnungen besser verständlich. Darin zeigen, größtenteils schematisch:
- Fig. 1: eine Teilschnittansicht einer Lufttrocknerpatrone gemäß einem ersten Ausführungsbeispiel der Erfindung; und
- Fig. 2: eine Teilschnittansicht einer Lufttrocknerpatrone gemäß einer Ausführungsvariante des ersten Ausführungsbeispiels der Erfindung.

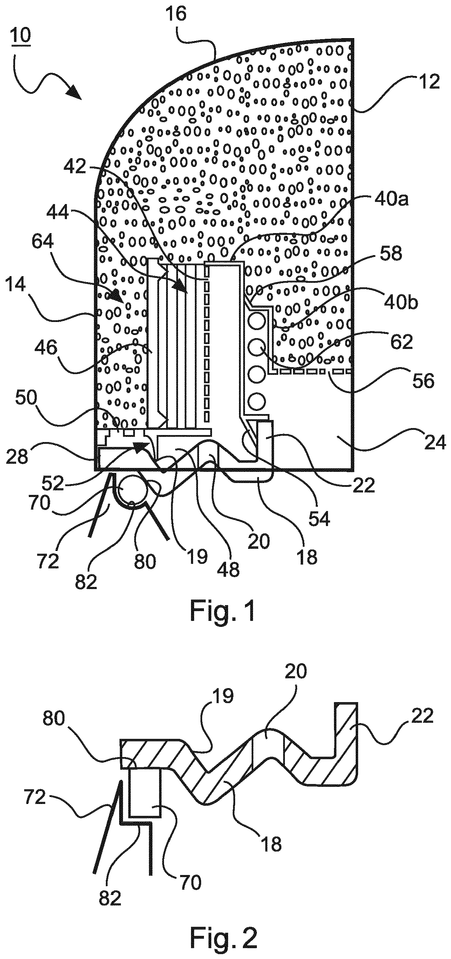

**Fig. 1** zeigt den Aufbau einer Lufttrocknerpatrone gemäß einem ersten Ausführungsbeispiel, die an einer Druckluftaufbereitungsvorrichtung einer Druckluftaufbereitungsanlage montierbar ist.

Die Lufttrocknerpatrone 10 ist im Wesentlichen rotationssymmetrisch zu einer Längsachse 12 ausgebildet und weist ein im Wesentlichen zylindrisches bzw. becherförmiges Patronengehäuse 14 mit einem geschlossenen Gehäusedeckel 16 auf, das in Form eines tiefgezogenen Bleches ausgestaltet ist. Die dem Gehäusedeckel 16 abgewandte offene Stirnseite des Patronengehäuses 14 ist mit einem Befestigungsflansch 18 (bevorzugt aus Metall) verschlossen. Der Befestigungsflansch 18 ist vorzugsweise fest und fluiddicht mit dem Patronengehäuse 14 verbunden (28), zum Beispiel verschweißt, verklebt oder dergleichen.

Der Befestigungsflansch 18 weist eine zum Beispiel kreisringförmige Einlassöffnung 20 oder mehrere entlang eines Kreisrings angeordnete Einlassöffnungen 20 und eine zum Beispiel kreisförmige, zentrale Auslassöffnung 24 auf. Die Auslassöffnung 24 ist in radialer Richtung quer zur Längsachse 12 innerhalb der Einlassöffnung(en) 20 angeordnet. Die Begriffe "Einlass" und "Auslass" beziehen sich in diesem Zusammenhang auf die Fluidströmungsrichtung durch die Lufttrocknerpatrone 10 im normalen Betrieb zum Trocknen und Reinigen des Fluids. Im Regenerationsbetrieb werden die Lufttrocknerpatrone 10 und damit die Einlass- und Auslassöffnungen 20, 24 in umgekehrter Richtung durchströmt.

Die zentrale Auslassöffnung 24 ist von einem Befestigungsstutzen 22 des Befestigungsflansches 18 begrenzt. Dieser Befestigungsstutzen 22 ist mit einem Innengewinde versehen.

Die Lufttrocknerpatrone 10 ist an einer Druckluftaufbereitungsvorrichtung (nicht dargestellt) montierbar, die Teil einer Druckluftaufbereitungsanlage ist. Die Druckluftaufbereitungsvorrichtung weist einen Anschlussstutzen auf, der mit einem Außengewinde versehen ist, sodass die Lufttrocknerpatrone 10 mit dem Befestigungsstutzen 22 ihres Befestigungsflansches 18 auf die Druckluftaufbereitungsvorrichtung geschraubt werden kann. Die Schraubverbindung zwischen dem Befestigungsstutzen 22 und dem Anschlussstutzen bildet eine lösbare, aber fluiddichte Verbindung zwischen der Lufttrocknerpatrone 10 und der Druckluftaufbereitungsvorrichtung. Im montierten Zustand sind die Längsachse 12 der Lufttrocknerpatrone 10 und die Längsachse des Anschlussstutzens der Druckluftaufbereitungsvorrichtung 30 koaxial zueinander ausgerichtet.

Die Druckluftaufbereitungsvorrichtung weist eine zum Beispiel kreisringförmige erste Öffnung oder mehrere entlang eines Kreisrings angeordnete Öffnungen auf, die im montierten Zustand der Lufttrocknerpatrone 10 in Fluidverbindung mit der/den Einlassöffnung(en) 20 des Befestigungsflansches 18 steht/stehen. Ferner weist die Druckluftaufbereitungsvorrichtung eine zum Beispiel kreisförmige zweite Öffnung auf, die im montierten Zustand der Lufttrocknerpatrone 10 in Fluidverbindung mit der Auslassöffnung 24 des Befestigungsflansches 18 steht.

Wie in Fig. 1 dargestellt, weist die Lufttrocknerpatrone 10 zudem ein inneres Gehäuse 40 auf, das aus einem ersten Teil 40a und einem zweiten Teil 40b besteht und vorzugsweise aus einem Kunststoffmaterial gebildet ist. Der erste Teil 40a des inneren Gehäuses 40 ist in radialer Richtung quer zur Längsachse 12 außerhalb des zweiten Teils 40b des inneren Gehäuses 40 angeordnet. Das Patronengehäuse 14 und das innere Gehäuse 40 bilden zwischen sich einen Aufnahmeraum für ein Trockenmittel 60 (z. B. Silikagel).

Der erste Teil 40a des inneren Gehäuses 40 ist an einem im Wesentlichen koaxial zur Längsachse 12 der Lufttrocknerpatrone 10 verlaufenden Wandabschnitt mit mehreren Öffnungen 42 versehen, die mit der Einlassöffnung 20 des Befestigungsflansches 18 in Fluidverbindung stehen. Im Normalbetrieb der Lufttrocknerpatrone 10 kann so die Druckluft aus der Druckluftaufbereitungsvorrichtung durch die Einlassöffnung 20 im Befestigungsflansch 18 und die Öffnungen 42 des inneren Gehäuses 40 ins Innere des Patronengehäuses 14 strömen.

Die mit den Öffnungen 42 versehene Wandung des ersten Teils 40a des inneren Gehäuses 40 ist von einer Filtereinrichtung 44 in Form eines Koaleszenzfilters oder Ölfilters 44 umgeben. Die Filtereinrichtung 44 ist zum Beispiel um die mit den Öffnungen 42 versehene Wandung des ersten Teils 40a des inneren Gehäuses 40 gewickelt. Auf diese Weise kann die Druckluft zumindest grob gereinigt werden, bevor sie das Trockenmittel 60 im Patronengehäuse 14 der Lufttrocknerpatrone 10 durchströmt.

Die Filtereinrichtung 44 ist bevorzugt von einem sogenannten Wicking-Material 46 umgeben, das durch ein poröses Material, ein Vliesmaterial, etc. gebildet sein kann und für Luft durchlässig ist. Das Wicking-Material 46 verhindert eine Ölkontamination des Trockenmittels 60. Anstelle des Wicking-Materials kann auch ein Trenngitter oder dergleichen vorgesehen sein.

Die Druckluft durchströmt die Filtereinrichtung 44 in radialer Richtung quer zur Längsachse 12 der Lufttrocknerpatrone 10. Ein Raumbereich 64 radial außerhalb der Filtereinrichtung 44 ist ebenfalls mit Trockenmittel 60 gefüllt. Auf diese Weise kann der Raum innerhalb des Patronengehäuses 14 optimal zur Aufnahme des Trockenmittels 60 genutzt werden, sodass im Ergebnis mehr Trockenmittel 60 im gleichen Bauraum untergebracht werden kann und so eine höhere Trockenleistung für die Lufttrocknerpatrone 10 erzielbar ist, oder weniger Bauraum für das Trockenmittel 60 benötigt wird und so die Lufttrocknerpatrone 10 mit einem kleineren Durchmesser von zum Beispiel nur etwa 126 mm (im Vergleich zu einem Durchmesser von etwa 140 mm herkömmlicher Lufttrocknerpatronen) konstruiert werden kann.

Unterhalb der Filtereinrichtung 44 ist ein Bypass 48 vorgesehen. In einer Wandung des ersten Teils 40a des inneren Gehäuses 40, die im Wesentlichen senkrecht zur Längsachse 12 der Lufttrocknerpatrone 10 verläuft, sind Öffnungen 50 vorgesehen, die den Innenraum der Lufttrocknerpatrone mit dem Bypass 48 verbinden.

Im Bypass 48 ist zudem ein Rückschlagventil 52 angeordnet. Das Rückschlagventil 52 verhindert im Normalbetrieb der Lufttrocknerpatrone 10, dass Druckluft von der Einlassöffnung 20 an der Filtereinrichtung 44 vorbei durch den Bypass 48 ungereinigt in das Trockenmittel 60 strömt, erlaubt aber im Regenerationsbetrieb der Lufttrocknerpatrone 10 einen Luftstrom an der Filtereinrichtung 44 vorbei.

Wie in Fig. 1 dargestellt, ist der erste Teil 40a des inneren Gehäuses 40 in seinem Außenumfangsbereich fluiddicht mit dem Patronengehäuse 14 und/oder dem Befestigungsflansch 18 verbunden, zum Beispiel verklebt. Im Bereich des Befestigungsstutzens 22 ist an dem ersten Teil 40a des inneren Gehäuses 40 eine Dichtlippe 54 vorgesehen, die bevorzugt einteilig damit ausgebildet ist und bevorzugt gegen den Befestigungsstutzen 22 elastisch vorgespannt ist. Diese Dichtlippe 54 ist vorzugsweise fluiddicht ausgestaltet, um den Bereich stromauf der Filtereinrichtung 44 und des Trockenmittels 60 gegen den Bereich stromab des Trockenmittels 60 abzudichten.

Der zweite Teil 40b des inneren Gehäuses 40 weist im zentralen Bereich Öffnungen 56 auf, die den Innenraum des Patronengehäuses 14 mit der Auslassöffnung 24 verbinden. Am radial äußeren Umfangsrand des zweiten Teils 40b ist eine Dichtlippe 58 vorgesehen, die bevorzugt einteilig damit ausgebildet ist und bevorzugt gegen das erste Teil 40a des inneren Gehäuses 40 elastisch vorgespannt ist. Diese Dichtlippe 58 ist derart dicht ausgestaltet, dass an der Schnittstelle zwischen den zwei Teilen des inneren Gehäuses 40 kein Trockenmittel 60 aus dem Innern des inneren Gehäuses 40 austreten kann.

Der zweite Teil 40b des inneren Gehäuses 40 ist in axialer Richtung, d. h. parallel oder koaxial zur Längsachse 12 der Lufttrocknerpatrone 10 in dem Patronengehäuse 10 bewegbar. Mittels eines Vorspannelements 62 in Form einer Druckfeder, die sich gegen den ersten Teil 40a des inneren Gehäuses 40 abstützt, wird der zweite Teil 40b in Richtung zum Gehäusedeckel 16 gedrückt, um das Trockenmittel 60 zu komprimieren. Wie in Fig. 1 erkennbar, ist der zweite Teil 40b des inneren Gehäuses 40 vorzugsweise derart ausgestaltet, dass ein Teil des Trockenmittels 60 in einem Raumbereich in radialer Richtung innerhalb des Vorspannelements 62 angeordnet ist. Durch diese optimale Raumausnutzung im Innern des Patronengehäuses 14 kann die Lufttrocknerpatrone 10 bei gleicher Trockenleistung kleiner, d. h. mit einem kleineren Durchmesser und/oder einer kleineren Höhe ausgestaltet werden.

Das innere Gehäuse 40 ist bevorzugt aus einem Kunststoffmaterial gebildet. Das Rückschlagventil 52 ist bevorzugt ebenfalls aus einem Kunststoffmaterial gebildet. Dabei können für das innere Gehäuse 40 und das Rückschlagventil 52 wahlweise gleiche oder unterschiedliche Kunststoffmaterialien eingesetzt werden.

Vorzugsweise ist das Rückschlagventil 52 einteilig mit dem ersten Teil 40a des inneren Gehäuses 40 ausgebildet. Beispielsweise ist das Rückschlagventil an dem ersten Teil 40a angespritzt oder mit diesem in 2K-Spritzgießtechnik gefertigt.

Gemäß der Erfindung stützt sich das Rückschlagventil 52 an der dem inneren Gehäuse 40 zugewandten Flanschinnenseite 19 des Befestigungsflansches 18 ab. Wie in Fig. 1 veranschaulicht, ist der Befestigungsflansch 18 dabei derart geformt, dass er für die Abstützung des Rückschlagventils 52 einen Abschnitt bereitstellt, der in einem Winkel zur Längsachse 12 der Lufttrocknerpatrone 10 angestellt ist. Im Ausführungsbeispiel von Fig. 1 beträgt dieser Winkel beispielhaft etwa 45°. Allgemein beträgt dieser Winkel höchstens etwa 80°, bevorzugt höchstens etwa 70°, bevorzugter höchstens etwa 55°, und bevorzugt wenigstens etwa 20°, bevorzugter wenigstens etwa 35°.

Im Ausführungsbeispiel von Fig. 1 ist das Rückschlagventil 52 in der Art einer Ventilklappe ausgestaltet. Die Ventilklappe ist im Wesentlichen ringförmig um die Längsachse 12 der Lufftrocknerpatrone 10 ausgebildet. Ein Ende der Ventilklappe, insbesondere das in axialer Richtung obere Ende der Ventilklappe ist an den ersten Teil 40a des inneren Gehäuses 40 angeformt. Das andere freie Ende der Ventilklappe stützt sich an der Flanschinnenseite 19 des Befestigungsflansches 18 ab. Das freie Ende der Ventilklappe ist in dem Ausführungsbeispiel von Fig. 1 im Wesentlichen parallel zur Längsachse 12 der Lufttrocknerpatrone 10 ausgerichtet.

Die Abstützung des vertikal ausgerichteten, freien Endes der Ventilklappe des Rückschlagventils 52 an einer schrägen Flanschinnenseite 19 führt zu einer verbesserten Schließwirkung im Normalbetrieb der Lufttrocknerpatrone 10.

In diesem Ausführungsbeispiel wird das Rückschlagventil 52 somit im Regenerationsbetrieb der Lufttrocknerpatrone radial, d. h. in einer Richtung quer zur Längsachse 12 der Lufttrocknerpatrone 10 durchströmt.

Bei dem Ausführungsbeispiel von Fig. 1 ist das Rückschlagventil 52 im Vergleich zu anderen Konstruktionen, bei denen sich das Rückschlagventil zum Beispiel an einer Innenumfangsfläche des Patronengehäuses 14 abstützt, in radialer Richtung weiter innen im Patronengehäuse 14 angeordnet. Als Resultat ist das Rückschlagventil 52 besser geschützt, insbesondere gegen mechanische Belastungen auf das Patronengehäuse 14, die ggf. zu einer Verformung des Patronengehäuses 14 und als Folge davon evt. zu einer Fehlfunktion des Rückschlagventils 52 führen können.

In anderen Ausführungsformen der Erfindung (nicht dargestellt) ist das freie Ende des als Ventilklappe ausgebildeten Rückschlagventils 52 schräg zur Längsachse 12 der Lufttrocknerpatrone 10 ausgerichtet. Dieser Anstellwinkel beträgt allgemein wenigstens etwa 10°, bevorzugt wenigstens etwa 20°, bevorzugter wenigstens etwa 35°, und bevorzugt höchstens etwa 70°, bevorzugter höchstens etwa 55°. Die Ausführungsformen mit einem schräg ausgerichteten freien Ende der Ventilklappe können beispielsweise mit dem obigen Ausführungsbeispiel kombiniert werden, sodass sich das schräg ausgerichtete freie Ende der Ventilklappe an einem schräg verlaufenden Abschnitt der Flanschinnenseite 19 des Befestigungsflansches 18 abstützt. Alternativ können diese Ausführungsformen mit einem schräg ausgerichteten freien Ende der Ventilklappe auch mit einem Standard-Befestigungsflansch kombiniert werden, sodass sich das schräg ausgerichtete freie Ende der Ventilklappe an einer ebenen (d.h. im Wesentlichen senkrecht zur Längsachse 12 der Lufttrocknerpatrone 10 verlaufenden) Flanschinnenseite 19 des Befestigungsflansches 18 abstützt.

Um im montierten Zustand der Lufttrocknerpatrone 10 eine fluiddichte Abdichtung zwischen der Druckluftaufbereitungsvorrichtung und der Lufttrocknerpatrone 10 in radialer Richtung zu erzielen, ist zwischen diesen beiden Elementen ein Dichtring 70, im Ausführungsbeispiel von Fig. 1 vorzugsweise ein O-Dichtring angeordnet.

Der Dichtring 70 liegt einerseits an einer Dichtfläche 80 der Lufttrocknerpatrone 10 und andererseits an einer gegenüber liegenden Dichtfläche 82 der Druckluftaufbereitungsvorrichtung an. Beim Verschrauben der Lufftrocknerpatrone 10 mit der Druckluftaufbereitungsvorrichtung wird der Dichtring 70 komprimiert und erzeugt eine fluiddichte Abdichtung gegenüber den beiden Dichtflächen 80, 82.

Die Dichtfläche 80 der Lufttrocknerpatrone 10 wird in diesem Ausführungsbeispiel durch die dem Innengehäuse 40 abgewandte Flanschaußenseite des Befestigungsflansches 18 bereitgestellt. Insbesondere liegt die Dichtfläche 80 im Ausführungsbeispiel von Fig. 1 dem Abschnitt der Flanschinnenseite 19 gegenüber, an dem sich das Rückschlagventil 52 wie oben beschrieben abstützt. Dementsprechend verläuft die Dichtfläche 80 ebenfalls in einem Winkel zur Längsachse 12 der Lufttrocknerpatrone 10, welcher demjenigen der Flanschinnenfläche 19 für die Abstützung des Rückschlagventils 52 entspricht.

Um die Position des Dichtrings 70 bei einer Druckluftbelastung in radialer Richtung nach außen abzustützen, ist an der Druckluftaufbereitungsvorrichtung beispielsweise ein umlaufender Stützvorsprung 72 ausgebildet. Dieser Stützvorsprung 72 weist bevorzugt eine Ausnehmung auf, die den O-Dichtring 70 gegenüber liegend zur Dichtfläche 80 am Befestigungsflansch 18 zumindest teilweise aufnehmen kann. Der Stützvorsprung 72 stellt mit dieser Ausnehmung die Dichtfläche 82 und eine Anlagefläche für den Dichtring 70 bereit.

Bei dieser Ausgestaltung des Befestigungsflansches 18 kann in vorteilhafter Weise ein O-Dichtring 70 eingesetzt werden, der kostengünstiger als der in der Regel verwendete Vierkant-Dichtring ist. Da bei dieser Ausgestaltung außerdem im Vergleich zu herkömmlichen Konstruktionen auf eine umlaufende Nut in einem Bodenblech der Lufttrocknerpatrone 10 verzichtet wird, in welche der Dichtring eingeklemmt werden muss, kann der Dichtring 70 sehr einfach an die Dichtfläche 80 angelegt werden, sodass die Montage und die Demontage des Dichtrings 70 vereinfacht sind. Zudem kann bei dieser Konstruktion auf ein Bodenblech und eine entsprechende Bördelverbindung zwischen Bodenblech und Patronengehäuse 14 verzichtet werden, sodass die Material- und Montagekosten der Lufttrocknerpatrone 10 reduziert sind. Stattdessen kann der umlaufende Rand des Befestigungsflansches 18 mit einem freien Ende des Patronengehäuses 14 fluiddicht verbunden sein (28), zum Beispiel verschweißt, verlötet oder verklebt.

In anderen Ausführungsformen der Erfindung kann die Lufttrocknerpatrone 10 aber auch ein solches Bodenblech aufweisen, das mit dem offenen Ende des Patronengehäuses zum Beispiel über eine Bördelverbindung verbunden ist.

**Fig. 2** zeigt den Aufbau einer Lufttrocknerpatrone gemäß einer Ausführungsvariante des obigen Ausführungsbeispiels. Dabei sind gleiche Bauteile und Komponenten mit den gleichen Bezugsziffern wie im obigen Ausführungsbeispiel gekennzeichnet. Während die Lufttrocknerpatrone bei dieser Ausführungsvariante entsprechend dem ersten Ausführungsbeispiel ausgestaltet ist, unterscheidet sich die Ausführungsvariante von dem oben beschriebenen Ausführungsbeispiel insbesondere durch die Ausgestaltung der Druckluftaufbereitungsvorrichtung.

Wie in Fig. 2 veranschaulicht, ist die Dichtfläche 80 in diesem Ausführungsbeispiel an einem Abschnitt der Flanschaußenseite des Befestigungsflansches 18 bereitgestellt, der im Wesentlichen senkrecht zur Längsachse 12 der Lufttrocknerpatrone verläuft. Die Dichtfläche 80 liegt damit nicht dem Abschnitt der Flanschinnenseite 19 gegenüber, an dem sich das Rückschlagventil 52 abstützt.

Entsprechend der Ausrichtung der Dichtfläche 80 ist der Dichtring 70 in diesem Fall bevorzugt als Vierkant-Dichtring ausgebildet. Position und Ausgestaltung des Stützvorsprungs 72 an der Druckluftaufbereitungsvorrichtung sind an die Dichtfläche 80 und den Vierkant-Dichtring 70 angepasst.

Im Übrigen entspricht diese Ausführungsvariante dem oben beschriebenen ersten Ausführungsbeispiel.

Die vorliegende Erfindung ist nicht auf die oben beschriebenen Ausführungsbeispiele des Druckluftaufbereitungssystems beschränkt. Der Fachmann wird vielmehr zahlreiche Varianten und Modifikationen erkennen, die in den Schutzbereich der Ansprüche fallen.

Während das innere Gehäuse 40 in den beschriebenen Ausführungsbeispielen jeweils aus einem ersten Teil 40a und einem zweiten Teil 40b aufgebaut ist, kann das innere Gehäuse 40 in anderen Ausführungsbeispielen auch einteilig ausgebildet sein oder aus mehr als zwei Gehäuseteilen zusammengesetzt sein.

Während in den obigen Ausführungsbeispielen die Druckfeder 62 so zwischen dem ersten Teil 40a und dem zweiten Teil 40b des inneren Gehäuses 40 angeordnet ist, dass sie das innere zweite Teil 40b im Patronengehäuse 14 in Richtung zum Gehäusedeckel 16 nach oben drückt, kann in anderen Ausführungsvarianten die Druckfeder 62 auch zwischen dem Gehäusedeckel 16 des Patronengehäuses 14 und einem inneren Gehäuseteil angeordnet sein, um das innere Gehäuseteil in Richtung zur Druckluftaufbereitungsvorrichtung 30 vorzuspannen.

Während das Rückschlagventil 52 und die Dichtlippen 54, 58 in den beschriebenen Ausführungsbeispielen jeweils einteilig mit dem inneren Gehäuse 40 ausgebildet sind, können diese Komponenten 52, 54, 58 in anderen Ausführungsbeispielen auch als separate Komponenten ausgebildet sein, die mit dem inneren Gehäuse 40 verbunden sind.

### BEZUGSZEICHENLISTE

- 10: Lufttrocknerpatrone
- 12: Längsachse
- 14: Patronengehäuse
- 16: Gehäusedeckel
- 18: Befestigungsflansch
- 19: Flanschinnenseite
- 20: Einlassöffnung
- 22: Befestigungsstutzen
- 24: Auslassöffnung
- 28: Verbindung
- 40: inneres Gehäuse
- 40a: erster Teil des inneren Gehäuses
- 40b: zweiter Teil des inneren Gehäuses
- 42: Öffnungen
- 43: Dichtlippe
- 44: Filtereinrichtung
- 46: Wicking-Material
- 48: Bypass
- 50: Öffnungen
- 52: Rückschlagventil
- 53: Innenumfangsfläche
- 54: Dichtlippe
- 56: Öffnungen
- 58: Dichtlippe
- 60: Trockenmittel
- 62: Vorspannelement
- 64: Raumbereich radial außerhalb von 44
- 70: Dichtring
- 72: Stützvorsprung
- 80: Dichtfläche
- 82: Dichtfläche

## Patentansprüche

1. Lufttrocknerpatrone (10), insbesondere für eine Druckluftaufbereitungsanlage eines Nutzfahrzeugs, aufweisend:
ein Patronengehäuse (14) mit einem geschlossenen Gehäusedeckel (16);
ein in dem Patronengehäuse (14) aufgenommenes Trockenmittel (60);
einen Befestigungsflansch (18) zum Verschließen einer dem Gehäusedeckel (16) abgewandten offenen Stirnseite des Patronengehäuses (14) und Befestigen der Lufttrocknerpatrone (10) an einer Druckluftaufbereitungsvorrichtung;
eine innerhalb des Patronengehäuses (14) angeordnete Filtereinrichtung (44), die im Druckluftstrom bezogen auf einen Normalbetrieb der Lufttrocknerpatrone (10) stromauf des Trockenmittels (60) positioniert ist;
einen Bypass (48) zum Umgehen der Filtereinrichtung (44); und
ein in dem Bypass (48) angeordnetes Rückschlagventil (52), das einen Druckluftstrom in Richtung zum Trockenmittel hin sperrt und einen Druckluftstrom in Richtung vom Trockenmittel her zulässt,
wobei das Rückschlagventil (52) in einer Richtung im Wesentlichen quer zu einer Längsachse (12) der Lufttrocknerpatrone (10) von Druckluft durchströmbar ist und an einer dem Gehäusedeckel (16) zugewandten Flanschinnenseite (19) des Befestigungsflansches (18) abgestützt ist;
**dadurch gekennzeichnet, dass**
das Rückschlagventil (52) ein freies Ende aufweist, das sich an der Flanschinnenseite (19) des Befestigungsflansches (18) abstützt,
wobei sich das freie Ende des Rückschlagventils (52) an einem Abschnitt der Flanschinnenfläche (19) des Befestigungsflansches (18) abstützt, der in einem Winkel von höchstens 80° zur Längsachse (12) der Lufttrocknerpatrone (10) verläuft.

2. Lufttrocknerpatrone nach Anspruch 1, bei welcher
in dem Patronengehäuse (14) ein inneres Gehäuse (40) angeordnet ist, um das Trockenmittel (60) in einem Zwischenraum zwischen dem Patronengehäuse (14) und dem inneren Gehäuse (40) aufzunehmen; und
das Rückschlagventil (52) einteilig mit dem inneren Gehäuse (40) ausgebildet ist.

3. Lufttrocknerpatrone nach Anspruch 2, bei welcher
das Rückschlagventil (52) an dem inneren Gehäuse (40) angeformt ist.

4. Lufttrocknerpatrone nach einem der vorhergehenden Ansprüche, bei welcher das Rückschlagventil (52) aus einem Kunststoffmaterial gefertigt ist.

5. Lufttrocknerpatrone nach einem der vorhergehenden Ansprüche, bei welcher das freie Ende des Rückschlagventils (52) in einem Winkel von wenigstens 10° zur Längsachse (12) der Lufttrocknerpatrone (10) ausgerichtet ist.

6. Lufttrocknerpatrone nach einem der vorhergehenden Ansprüche, bei welcher eine dem Innengehäuse (40) abgewandte Flanschaußenseite des Befestigungsflansches (18) eine Dichtfläche (80) für einen Dichtring (70) bereitstellt; und die Dichtfläche (80) einem Abschnitt der Flanschinnenseite (19) gegenüber liegt, an dem sich das Rückschlagventil (52) abstützt.

7. Lufttrocknerpatrone nach einem der vorhergehenden Ansprüche, bei welcher die Filtereinrichtung (44) im Wesentlichen koaxial zur Längsachse (12) der Lufttrocknerpatrone (10) angeordnet ist, wobei die Filtereinrichtung (44) in radialer Richtung quer zur Längsachse (12) der Lufttrocknerpatrone (10) durchströmbar ist.

8. Lufttrocknerpatrone nach Anspruch 7, bei welcher
ein Teil des Trockenmittels (60) in einem Raumbereich (64) radial außerhalb der Filtereinrichtung (44) aufgenommen ist.

9. Druckluftaufbereitungsanlage, insbesondere für Nutzfahrzeuge, mit wenigstens einer Lufttrocknerpatrone (10) nach einem der vorhergehenden Ansprüche.

## Claims

1. Air dryer cartridge (10), especially for a compressed air treatment system of a commercial vehicle, comprising:
a cartridge housing (14) with a closed housing cover (16);
a desiccant (60) accommodated in the cartridge housing (14);
a fastening flange (18) for closing an open end face of the cartridge housing (14) facing away from the housing cover (16) and for fastening the air dryer cartridge (10) to a compressed air treatment device;
a filter device (44) situated inside the cartridge housing (14), which is positioned upstream of the desiccant (60) in the compressed air flow in a normal operation of the air dryer cartridge (10);
a bypass (48) for bypassing the filter device (44); and
a check valve (52) arranged in the bypass (48), which blocks a compressed air flow in the direction toward the desiccant and allows a compressed air flow in the direction from the desiccant,
wherein compressed air can flow through the check valve (52) in a direction substantially transverse to a longitudinal axis (12) of the air dryer cartridge (10) and the check valve is braced against an inside (19) of the fastening flange (18) facing toward the housing cover (16).
**characterised in that**
the check valve (52) has a free end which is braced against the flange inside (19) of the fastening flange (18),
wherein the free end of the check valve (52) is braced against a section of the inner surface (19) of the fastening flange (18), running at an angle of at most around 80° to the longitudinal axis (12) of the air dryer cartridge (10).

2. Air dryer cartridge according to claim 1, wherein
an inner housing (40) is arranged in the cartridge housing (14) to contain the desiccant (60) in a gap between the cartridge housing (14) and the inner housing (40); and
the check valve (52) is formed as a single piece with the inner housing (40).

3. Air dryer cartridge according to claim 2, wherein
the check valve (52) is formed on the inner housing (40).

4. Air dryer cartridge according to any of the preceding claims, wherein
the check valve (52) is made from a plastic material.

5. Air dryer cartridge according to any of the preceding claims, wherein
the free end of the check valve (52) is oriented at an angle of at least around 10° to the longitudinal axis (12) of the air dryer cartridge (10).

6. Air dryer cartridge according to any of the preceding claims, wherein
an outer side of the fastening flange (18) facing away from the inner housing (40) provides a sealing surface (80) for a sealing ring (70); and
the sealing surface (80) lies opposite a section of the flange inside (19), against which the check valve (52) is braced.

7. Air dryer cartridge according to any of the preceding claims, wherein
the filter device (44) is arranged substantially coaxially with the longitudinal axis (12) of the air dryer cartridge (10), wherein flow occurs through the filter device (44) in the radial direction transversely to the longitudinal axis (12) of the air dryer cartridge (10).

8. Air dryer cartridge according to claim-7, wherein
a portion of the desiccant (60) is accommodated in a space (64) radially outside the filter device (44).

9. Compressed air treatment system, especially for commercial vehicles, with at least one air dryer cartridge (10) according to any of the preceding claims.

## Revendications

1. Cartouche (10) de déshumidificateur d'air, notamment pour une installation de traitement d'air comprimé d'un véhicule utilitaire, comportant :
un boîtier (14) de cartouche ayant un couvercle (16) fermé de boîtier ;
un agent (60) déshumidificateur reçu dans le boîtier (14) de la cartouche ;
un flasque (18) de fixation pour la fermeture d'un côté frontal ouvert, loin du couvercle (16) du boîtier, du boîtier (14) de la cartouche et pour la fixation de la cartouche (10) de déshumidificateur d'air à un système de traitement d'air comprimé ;
un dispositif (44) de filtration, qui est disposé à l'intérieur du boîtier (14) de la cartouche et qui est mis en position dans le courant d'air comprimé, rapporté à un fonctionnement normal de la cartouche (10) de déshumidificateur d'air, en amont de l'agent (60) déumi ;
une dérivation (48) pour contourner le dispositif (44) de filtration ; et
un clapet antiretour (52), qui est monté dans la dérivation (48), qui arrête un courant d'air comprimé dans le sens allant vers l'agent déshumidificateur et qui autorise un courant d'air comprimé dans le sens depuis, l'agent déshumidificateur ;
dans laquelle le clapet antiretour (52) peut être traversé par de l'air comprimé dans une direction sensiblement transversalement à un axe (12) longitudinal de la cartouche (10) de déshumidificateur d'air et s'appuie sur un côté (19) intérieur, tourné vers le couvercle (16) du boîtier, du flasque (18) de fixation ;
**caractérisé en ce que**
le clapet antiretour (52) a une extrémité libre, qui s'appuie sur le côté (19) intérieur du flasque (18) de fixation,
dans laquelle l'extrémité libre du clapet antiretour (52) s'appuie sur une partie de la surface (19) intérieure du flasque (18) de fixation, qui fait un angle de 80° au plus avec l'axe (12) longitudinal de la cartouche (10) de déshumidificateur d'air.

2. Cartouche de déshumidificateur d'air suivant la revendication 1, dans laquelle
un boîtier (40) intérieur est disposé dans le boîtier (14) de la cartouche, afin de recevoir l'agent (60) déshumidificateur dans un espace intermédiaire entre le boîtier (14) de la cartouche et le boîtier (40) intérieur ; et
le clapet antiretour (52) est constitué d'une seule pièce avec le boîtier (40) intérieur.

3. Cartouche de déshumidificateur d'air suivant la revendication 2, dans laquelle
le clapet antiretour (52) vient de matière avec le boîtier (40) intérieur.

4. Cartouche de déshumidificateur d'air suivant l'une des revendications précédentes, dans laquelle
le clapet antiretour (52) est en une matière plastique.

5. Cartouche de déshumidificateur d'air suivant l'une des revendications précédentes, dans laquelle
l'extrémité libre du clapet antiretour (52) fait un angle de moins de 10° avec l'axe (12) longitudinal de la cartouche (12) de déshumidificateur d'air.

6. Cartouche de déshumidificateur d'air suivant l'une des revendications précédentes, dans laquelle
un côté extérieur, loin du boîtier (40) intérieur, du flasque (18) de fixation procure une surface (80) d'étanchéité pour une bague (70) d'étanchéité ; et la surface (80) d'étanchéité est en face d'une partie du côté (19) intérieur du flasque où s'appuie le clapet antiretour (52) .

7. Cartouche de déshumidificateur d'air suivant l'une des revendications précédentes, dans laquelle
le dispositif (44) de filtration est disposé sensiblement coaxialement à l'axe (12) longitudinal de la cartouche (10) de déshumidificateur d'air, le dispositif (44) de filtration pouvant être traversé dans la direction radiale transversalement à l'axe (12) longitudinal de la cartouche (10) de déshumidificateur d'air.

8. Cartouche de déshumidificateur d'air suivant la revendication 7, dans laquelle
une partie de l'agent (60) déshumidificateur est reçue dans une région (64) de l'espace radialement à l'extérieur du dispositif (44) de filtration.

9. Installation de traitement d'air comprimé, notamment pour des véhicules utilitaires, comprenant au moins une cartouche (10) de déshumidificateur d'air suivant l'une des revendications précédentes.
